# EUROPEAN PATENT APPLICATION

(11) **EP 4 130 143 A1**
(43) Date of publication of application: **08.02.2023**
(21) Application number: 21779628.3
(22) Date of filing: 31.03.2021
(51) Int. Cl.: C08L 23/20, C08L 53/02, C08L 91/00, C08J 9/04

(54) **COMPOSITION AND MOLDED ARTICLE**

(30) Priority: 31.03.2020 JP 2020062417
(71) Applicant: Mitsui Chemicals, Inc., Tokyo 105-7122 (JP)
(72) Inventor: NOMA, Satoshi, Sodegaura-shi, Chiba 299-0265 (JP); MATAYOSHI, Tomoya, Sodegaura-shi, Chiba 299-0265 (JP); WATANABE, Takayuki, Sodegaura-shi, Chiba 299-0265 (JP); ERIGUCHI, Michio, Sodegaura-shi, Chiba 299-0265 (JP); HORIYA, Ryota, Sodegaura-shi, Chiba 299-0265 (JP)
(74) Representative: Hoffmann Eitle
(86) International application number: PCT/JP2021/013863
(87) International publication number: WO 2021/201112

(57) **Abstract**

A composition includes a 4-methyl-1-pentene-based polymer (a) in which at least one or more temperatures showing a local maximum value of a loss tangent (tan δ), which is obtained by dynamic viscoelasticity measurement under conditions of a temperature rising rate of 4 °C/min, a frequency of 1.59 Hz, and a strain amount of 0.1%, are present in a range of 10°C or higher and 100°C or lower, and the local maximum value of the loss tangent is 0.5 or more and 3.5 or less, and an organic compound (b), in which a content of the organic compound (b) is 5 to 250 parts by mass with respect to 100 parts by mass of the 4-methyl-1-pentene-based polymer (a), and the organic compound (b) has a viscosity (mPa·s) in a range of 65 to 120, or a ratio between a melt flow rate (g/10 min.) of the 4-methyl-1-pentene-based copolymer (a) and a melt flow rate (g/10 min.) of the organic compound (b) is 1:1.0 to 0.1.

## Description

### TECHNICAL FIELD

The present invention relates to a composition and a molded article.

### BACKGROUND ART

Since a 4-methyl-1-pentene-based polymer containing 4-methyl-1-pentene as a main constituent monomer has excellent various performances such as releasability, heat resistance, water resistance, and solvent resistance, the polymer is widely used for various applications. For example, a film using 4-methyl-1-pentene is used for a flexible print substrate, a release film for molding a composite material, and the like by taking advantage of the features such as high melting point and good releasability. As an example, Patent Document 1 discloses that by using a film using a 4-methyl-1-pentene-based polymer as an interlayer film of laminated glass, the vibration damping properties and impact absorption performance of the glass are improved and the transparency is improved.

### RELATED DOCUMENT

### PATENT DOCUMENT

[Patent Document 1] Japanese Unexamined Patent Publication No. 2019-156943

### SUMMARY OF THE INVENTION

### TECHNICAL PROBLEM

As a result of intensive studies conducted from the viewpoint of imparting new properties to a conventional 4-methyl-1-pentene-based polymer, the present inventors have focused on combining a 4-methyl-1-pentene-based polymer, and an organic compound having specific physical properties for the first time. As a result of further studies, it has been found that by preparing a composition in which the content ratio of the 4-methyl-1-pentene-based polymer and the organic compound having specific physical properties is controlled, compared with the 4-methyl-1-pentene-based polymer before applying the organic compound, the temperature showing the local maximum value of the tangent loss can be shifted to a low temperature side while maintaining the local maximum value of the loss tangent, and good moldability can be maintained.

The present invention has been made in view of the above circumstances, and provides a composition capable of shifting the temperature showing a local maximum value of a tangent loss to a low temperature side and maintaining good moldability.

### SOLUTION TO PROBLEM

That is, according to the present invention, a composition shown below is provided.
[1] A composition including:
   a 4-methyl-1-pentene-based polymer (a) in which at least one or more temperatures showing a local maximum value of a loss tangent (tan δ), which is obtained by dynamic viscoelasticity measurement under conditions of a temperature rising rate of 4 °C/min, a frequency of 1.59 Hz, and a strain amount of 0.1%, are present in a range of 10°C or higher and 100°C or lower, and the local maximum value of the loss tangent is 0.5 or more and 3.5 or less; and
   an organic compound (b),
   in which a content of the organic compound (b) is 5 to 250 parts by mass with respect to 100 parts by mass of the 4-methyl-1-pentene-based polymer (a), and
   the organic compound (b) has a viscosity (mPa·s) in a range of 65 to 120, or a ratio between a melt flow rate (g/10 min.) of the 4-methyl-1-pentene-based copolymer (a) and a melt flow rate (g/10 min.) of the organic compound (b) is 1:1.0 to 0.1.
[2] A composition including:
   a 4-methyl-1-pentene-based polymer (a) in which at least one or more temperatures showing a local maximum value of a loss tangent (tan δ), which is obtained by dynamic viscoelasticity measurement under conditions of a temperature rising rate of 4 °C/min, a frequency of 1.59 Hz, and a strain amount of 0.1%, are present in a range of 10°C or higher and 100°C or lower, and the local maximum value of the loss tangent is 0.5 or more and 3.5 or less; and
   an organic compound (b),
   in which a content of the organic compound (b) is 5 to 250 parts by mass with respect to 100 parts by mass of the 4-methyl-1-pentene-based polymer (a), and
   the organic compound (b) has a viscosity (mPa·s) in a range of 65 to 120, or a melt flow rate (g/10 min.) of 6 or less.
[3] The composition according to [1] or [2], in which the 4-methyl-1-pentene-based polymer (a) includes a constitutional unit derived from 4-methyl-1-pentene and a constitutional unit derived from an α-olefin having 2 to 20 carbon atoms other than the 4-methyl-1-pentene.
[4] The composition according to [3], in which when a sum of the constitutional unit derived from the 4-methyl-1-pentene and the constitutional unit derived from the α-olefin having 2 to 20 carbon atoms other than the 4-methyl-1-pentene is 100 mol%, a content of the constitutional unit derived from the 4-methyl-1-pentene is 10 mol% or more and 90 mol% or less.
[5] The composition according to [4], in which the α-olefin has 2 to 5 carbon atoms.
[6] The composition according to any one of [1] to [5], in which the organic compound (b) includes a saturated hydrocarbon compound (b1) having a viscosity (mPa·s) in a range of 65 to 120 and a pour point of -10°C or lower.
[7] The composition according to [6], in which the saturated hydrocarbon compound (b1) has 20 or more carbon atoms.
[8] The composition according to any one of [1] to [7], in which the composition includes an α-olefin polymer (b2) having 2 to 20 carbon atoms.
[9] The composition according to [8], in which the α-olefin polymer (b2) includes a copolymer using a compound having a polymerizable double bond selected from styrenes, dienes, cyclic compounds, and oxygen-containing compounds as a comonomer.
[10] The composition according to any one of [1] to [9], in which at least one or more temperatures showing the local maximum value of the loss tangent (tan δ) of dynamic viscoelasticity of the 4-methyl-1-pentene-based polymer (a) are present in a range of 10°C or higher and 40°C or lower, and the local maximum value of the loss tangent is 0.8 or more and 3 or less.
[11] The composition according to any one of [1] to [10], in which the composition includes a foaming agent.
[12] The composition according to [11], in which the foaming agent is an inorganic or organic thermal decomposition type chemical foaming agent or a physical foaming agent.
[13] A molded article including:
   the composition according to any one of [1] to [12].
[14] The molded article according to [13], in which the molded article is a foam and has a density of 0.10 to 1.0 g/cm³.

### ADVANTAGEOUS EFFECTS OF INVENTION

According to the present invention, it is possible to provide a composition capable of shifting the temperature showing a local maximum value of a tangent loss to a low temperature side and maintaining good moldability.

### DESCRIPTION OF EMBODIMENTS

Hereinafter, embodiments of the present invention will be described.

In the present specification, unless otherwise specified, the term "substantially" means to include a range in consideration of production tolerances, assembly variations, and the like.

In the present specification, the expression "a to b" in the description of a numerical range represents a or more and b or less unless specified otherwise. For example, "1% to 5% by mass" means "1% by mass or more and 5% by mass or less".

### <Composition>

A composition of the present embodiment includes a 4-methyl-1-pentene-based polymer (a) in which at least one or more temperatures showing a local maximum value of a loss tangent (tan δ), which is obtained by dynamic viscoelasticity measurement under conditions of a temperature rising rate of 4 °C/min, a frequency of 1.59 Hz, and a strain amount of 0.1%, are present in a range of 10°C or higher and 100°C or lower, and the local maximum value of the loss tangent is 0.5 or more and 3.5 or less, and an organic compound (b), in which a content of the organic compound (b) is 5 to 250 parts by mass with respect to 100 parts by mass of the 4-methyl-1-pentene-based polymer (a), and the organic compound (b) has a viscosity (mPa·s) in a range of 65 to 120, or a ratio between a melt flow rate (g/10 min.) of the 4-methyl-1-pentene-based copolymer (a) and a melt flow rate (g/10 min.) of the organic compound (b) is 1:1.0 to 0.1.

As a result, the temperature showing the local maximum value of the tangent loss can be shifted to the low temperature side, and good moldability can be maintained.

Hereinafter, each component will be described in detail.

### [4-Methyl-1-Pentene-Based Polymer (a)]

The 4-methyl-1-pentene-based polymer (a) according to the present embodiment has at least one or more temperatures showing a local maximum value of a loss tangent (tan δ), which is obtained by dynamic viscoelasticity measurement under the conditions of a temperature rising rate of 4 °C/min, a frequency of 1.59 Hz, and a strain amount of 0.1%, in a range of 10°C or higher and 100°C or lower, and the local maximum value of the loss tangent is 0.5 or more and 3.5 or less.

For example, the 4-methyl-1-pentene-based polymer (a) can be cut into a test piece having a size of 30 mm in length × 10 mm in width, and measurement can be performed using a rheometer under the conditions of a frequency of 1.59 Hz, a temperature rising rate of 4 °C/min, a measurement temperature range of 0°C to 110°C, a strain amount of 0.1%, a chuck-to-chuck distance of 20 mm, and a twist mode.

The present inventors have found that when a 4-methyl-1-pentene-based polymer (a) having a local maximum value of a specific loss tangent (tan δ), and a specific temperature range showing the local maximum value, and an organic compound (b) described later are used together, the temperature showing the local maximum value of the tangent loss is shifted to the low temperature side, and good moldability can be maintained.

The details of the reason for this are not clear, but the reason may be considered as follows.

First, it is considered that the 4-methyl-1-pentene-based polymer (a) in which the local maximum value of the loss tangent is within the above range in a range of 10°C or higher and 100°C or lower can convert more of the mechanical energy given at the time of deformation into thermal energy and can absorb a large amount of energy, and thereby that the restoration speed after deformation becomes slow. As a result, it is considered that it is possible to satisfactorily follow the deformation while maintaining the flexibility of the 4-methyl-1-pentene-based polymer (a).

In addition, it is intended that by controlling the loss tangent (tan δ) in a relatively low frequency region of 1.59 Hz, shape followability to a force (also referred to as a slow force) applied over time can be obtained.

Therefore, the present inventors have found that by newly combining a specific organic compound (b) with the 4-methyl-1-pentene-based polymer (a) having such characteristics, the temperature (Tg) showing the local maximum value of the loss tangent (tan δ) of the 4-methyl-1-pentene-based polymer (a) can be shifted to the low temperature side, and good moldability can be maintained in the obtained composition. In addition, shifting the temperature (Tg) showing the local maximum value to the low temperature side is intended to obtain impact absorption properties at a low temperature.

The loss tangent of the 4-methyl-1-pentene-based polymer (a) according to the present embodiment can be controlled to be in the above range, for example, by appropriately adjusting (1) the kind and mixing ratio of the 4-methyl-1-pentene-based polymer (a), (2) the presence or absence of crosslinking, (3) a method for molding the composition, and the like.

Specifically, for example, the mixing ratio of the 4-methyl-1-pentene-based polymer (a) in the composition may be increased, and the 4-methyl-1-pentene-based polymer (a) may not be crosslinked.

The 4-methyl-1-pentene-based polymer (a) according to the present embodiment is preferably uncrosslinked from the viewpoint of improving shape followability and flexibility. That is, it is preferable that the 4-methyl-1-pentene-based polymer (a) according to the present embodiment is an uncrosslinked polymer that has not been subjected to a crosslinking treatment such as ionization radiation crosslinking using an electron beam or γ-ray, for example. With this, the local maximum value of the loss tangent in a range of 10°C or higher and 100°C or lower can be improved, and a 4-methyl-1-pentene-based polymer (a) having more excellent moldability can be obtained.

In the 4-methyl-1-pentene-based polymer (a) according to the present embodiment, it is preferable that at least one or more temperatures showing the local maximum value of the loss tangent (tan δ) of dynamic viscoelasticity are present in a range of 10°C or higher and 80°C or lower, it is more preferable that one or more temperatures showing the local maximum value of the loss tangent are present in a range of 10°C or higher and 60°C or lower, it is even more preferable that one or more temperatures showing the local maximum value of the loss tangent are present in a range of 10°C or higher and 50°C or lower, and it is particularly preferable that one temperature showing the local maximum value of the loss tangent is present in a range of 10°C or higher and 50°C or lower. This makes it possible to obtain better moldability and impact absorption properties at a low temperature when the composition of the present embodiment is used in an environment of 20 °C or lower.

In addition, in the 4-methyl-1-pentene-based polymer (a) according to the present embodiment, the local maximum value of the loss tangent is preferably 0.8 or more, more preferably 1.0 or more, and even more preferably 1.2 or more. In the composition according to the present embodiment, the local maximum value of the loss tangent is preferably 3.0 or less, and more preferably 2.8 or less.

With this, it is possible to improve the performance balance between flexibility and shape followability of the composition according to the present embodiment. Here, the larger the local maximum value of the loss tangent, the stronger the viscous properties of the composition. The composition which has strong viscous properties can convert more of mechanical energy given at a time of deformation into thermal energy and absorb more energy. Therefore, it is considered that the restoration speed after deformation becomes more moderate. As a result, it is considered that while maintaining the flexibility of composition, it is possible to more satisfactorily maintain the shape after deformation or to more satisfactorily follow the deformation.

Examples of the 4-methyl-1-pentene-based polymer (a) according to the present embodiment include a 4-methyl-1-pentene·α-olefin copolymer (c) including a constitutional unit (c1) derived from 4-methyl-1-pentene and a constitutional unit (c2) derived from an α-olefin having 2 to 20 carbon atoms other than 4-methyl-1-pentene.

Here, in the present embodiment, the "a-olefin having 2 to 20 carbon atoms" means not including 4-methyl-1-pentene unless otherwise specified.

In the 4-methyl-1-pentene·α-olefin copolymer (c) according to the present embodiment, from the viewpoint of further improving flexibility and moldability of the composition, when a sum of the constitutional unit (c1) and the constitutional unit (c2) is 100 mol%, it is preferable that a content of the constitutional unit (c1) is 10 mol% or more and 90 mol% or less, and a content of the constitutional unit (c2) is 10 mol% or more and 90 mol% or less.

In addition, in the 4-methyl-1-pentene·α-olefin copolymer (c) according to the present embodiment, from the viewpoint of further improving flexibility, mechanical properties, or the like of the composition, when the sum of the constitutional unit (c1) and the constitutional unit (c2) is 100 mol%, it is more preferable that the content of the constitutional unit (c1) is 30 mol% or more and 90 mol% or less, and the content of the constitutional unit (c2) is 10 mol% or more and 70 mol% or less, it is even more preferable that the content of the constitutional unit (c1) is 50 mol% or more and 90 mol% or less, and the content of the constitutional unit (c2) is 10 mol% or more and 50 mol% or less, it is still even more preferable that the content of the constitutional unit (c1) is 60 mol% or more and 90 mol% or less and the content of the constitutional unit (c2) is 10 mol% or more and 40 mol% or less, and it is particularly preferable that the content of the constitutional unit (c1) is 65 mol% or more and 90 mol% or less and the content of the constitutional unit (c2) is 10 mol% or more and 35 mol% or less.

In the present embodiment, examples of the α-olefin having 2 to 20 carbon atoms used in the 4-methyl-1-pentene ·α-olefin copolymer (c) includes a linear or branched α-olefin, a cyclic olefin, an aromatic vinyl compound, a conjugated diene, a functionalized vinyl compound, and the like, and the linear α-olefin is preferable.

The number of carbon atoms of the linear α-olefin is preferably 2 to 10, more preferably 2 to 5, and even more preferably 2 to 3. Examples of the linear α-olefin include ethylene, propylene, 1-butene, 1-pentene, and the like. One kind or two or more kinds selected from ethylene, propylene, 1-butene, 1-pentene, 1-hexene, 1-octene, and 1-decene are preferable, and at least one kind selected from ethylene and propylene is more preferable.

The number of carbon atoms of the branched α-olefin is preferably 5 to 20, and more preferably 5 to 15. Examples of the branched α-olefin include 3-methyl-1-butene, 3-methyl-1-pentene, 3-ethyl-1-pentene, and the like.

The number of carbon atoms of the cyclic olefin is preferably 5 to 15. Examples of the cyclic olefin include cyclopentene, cyclohexene, cycloheptene, norbornene, 5-methyl-2-norbornene, tetracyclododecene, vinylcyclohexane, and the like.

Examples of the aromatic vinyl compound include mono- or poly-alkylstyrenes such as styrene, α-methylstyrene, o-methylstyrene, m-methylstyrene, p-methylstyrene, o,p-dimethylstyrene, o-ethylstyrene, m-ethylstyrene, p-ethylstyrene, and the like.

The number of carbon atoms of the conjugated diene is preferably 4 to 20, and more preferably 4 to 10. Examples of the conjugated diene include 1,3-butadiene, isoprene, chloroprene, 1,3-pentadiene, 2,3-dimethylbutadiene, 4-methyl-1,3-pentadiene, 1,3-hexadiene, 1,3-octadiene, and the like.

Examples of the functionalized vinyl compound include unsaturated carboxylic acids such as a hydroxyl group-containing olefin, a halogenated olefin, a (meth) acrylic acid, a propionic acid, a 3-butenoic acid, a 4-pentenoic acid, a 5-hexenoic acid, a 6-heptenoic acid, a 7-octenoic acid, an 8-nonenoic acid, a 9-decenoic acid, and a 10-undecenoic acid, and acid anhydrides or acid halides thereof, unsaturated amines such as allylamine, 5-hexenamine, 6-hepteneamine, and the like, (2,7-octadienyl) succinic anhydride, pentapropenyl succinic anhydride, an unsaturated epoxy compound, an ethylenically unsaturated silane compound, and the like.

Examples of the hydroxyl group-containing olefin include a linear or branched terminal hydroxylated α-olefin having 2 to 20 carbon atoms, and preferably 2 to 15 carbon atoms, and the like.

Examples of the halogenated olefin include a linear or branched halogenated α-olefin having 2 to 20 carbon atoms, and preferably 2 to 15 carbon atoms, and the like.

These α-olefins having 2 to 20 carbon atoms can be used alone or in combination of two or more kinds thereof. Among these, ethylene and propylene are preferable, but the use of propylene is particularly preferable from a viewpoint of further improving flexibility and the like.

It should be noted that the 4-methyl-1-pentene·α-olefin copolymer (c) may contain constitutional units other than the constitutional unit (c1) and the constitutional unit (c2) within a range of not impairing the object of the present invention. Other constitutions include constitutional units derived from non-conjugated polyene.

Examples of the non-conjugated polyene include a linear, branched, or cyclic diene having preferably 5 to 20 carbon atoms, and more preferably 5 to 10 carbon atoms, various norbornenes, norbornadienes, and the like. Among these, 5-vinylidene-2-norbornene and 5-ethylidene-2-norbornene are preferable.

From a viewpoint of further improving moldability, flexibility or mechanical strength of the composition, the intrinsic viscosity [η] in decalin of 135°C of the 4-methyl-1-pentene-based polymer (a) according to the present embodiment is preferably 0.01 to 5.0 dL/g, more preferably 0.1 to 4.0 dL/g, even more preferably 0.5 to 3.0 dL/g, and particularly preferably 1.0 to 2.8 dL/g.

The density of the 4-methyl-1-pentene-based polymer (a) according to the present embodiment, measured by ASTM D 1505 (underwater substitution method), is preferably 0.810 to 0.850 g/cm³, more preferably 0.820 to 0.850 g/cm³, and even more preferably 0.830 to 0.850 g/cm³.

The melt flow rate of the 4-methyl-1-pentene-based polymer (a) according to the present embodiment is preferably 0.1 to 100 (g/10 min.), more preferably 1 to 70 (g/10 min.), and even more preferably 1 to 20 (g/10 min.) .

The 4-methyl-1-pentene-based polymer (a) according to the present embodiment can be produced by various methods. For example, it is possible to produce the 4-methyl-1-pentene-based polymer by using known catalysts such as magnesium-supported titanium catalysts; metallocene catalysts described in International Publication No. WO 01/53369, International Publication No. WO 01/027124, Japanese Unexamined Patent Publication No. H03-193796, Japanese Unexamined Patent Publication No. H02-41303, and the like; olefin polymerization catalysts containing a metallocene compound described in International Publication No. WO 2011/055803, and the like.

Although the content of the 4-methyl-1-pentene-based polymer (a) in the composition according to the present embodiment is not particularly limited, when the entire content of the composition is 100% by mass, the content of the 4-methyl-1-pentene-based polymer (a) is preferably 50% by mass or more, more preferably 60% by mass or more, even more preferably 65% or more by mass, still even more preferably 70% by mass or more, and particularly preferably 75% by mass or more, and preferably 100% by mass or less, more preferably 99.5% by mass or less, even more preferably 99% by mass or less, still even more preferably 98% by mass or less, and particularly preferably 97% by mass or less.

With this, it is possible to obtain a composition which has excellent balance between flexibility, shape followability, lightness, mechanical properties, handleability, appearance, moldability, moisture resistance, and the like.

In the present embodiment, it is preferable that the amount of the organic compound (b) is 5 to 250 parts by mass with respect to 100 parts by mass of the 4-methyl-1-pentene-based polymer (a), and is adjusted according to the organic compound (b) described later.

By setting the mass ratio to be in the above numerical range, both moldability and impact absorption properties at a low temperature can be achieved.

### [Organic Compound (b)]

The organic compound (b) of the present embodiment preferably has a viscosity (mPa -s) in a range of 65 to 120. The viscosity (mPa·s) is preferably 70 to 100, and more preferably 75 to 90. By setting the viscosity to be in the above numerical range, both moldability and impact absorption properties at a low temperature can be achieved.

The viscosity of the organic compound (b) of the present embodiment can be calculated by conversion from the value of the kinematic viscosity measured at 40°C according to JIS K 2283.

The upper limit value of the melt flow rate (g/10 min.) of the organic compound (b) of the present embodiment is more preferably in the order of 18 or less, 16 or less, 14 or less, 12 or less, 10 or less, and 8 or less. The upper limit value of the melt flow rate (g/10 min.) may be 6 or less, and is preferably 5.5 or less, and more preferably 5.0 or less. With this, both moldability and impact absorption properties at a low temperature are easily achieved. On the other hand, the lower limit value of the melt flow rate (g/10 min.) is not particularly limited, and is preferably 1 or more, for example, from the viewpoint of maintaining good moldability.

Further, in the composition of the present embodiment, the ratio of the melt flow rate (g/10 min.) between the 4-methyl-1-pentene-based copolymer (a) and the organic compound (b) is preferably 1: 1.0 to 0.1, more preferably 1: 0.8 to 0.1, and even more preferably 1: 0.6 to 0.1. By setting the ratio to be in the above numerical range, both moldability and impact absorption properties at a low temperature can be achieved.

In the present embodiment, each melt flow rate can be measured under the conditions of 230°C and a test load of 2.16 kgf according to JIS K 7210.

In addition, in the present embodiment, it is preferable that the organic compound (b) is one kind or two kinds selected from the group consisting of a saturated hydrocarbon compound (b1) having a viscosity (mPa·s) in a range of 65 to 120 and a pour point of -10°C or lower, and an α-olefin polymer (b2) having 2 to 20 carbon atoms and an MFR (g/10 min.) in a range of 20 or less.

The pour point of the saturated hydrocarbon compound (b1) is -10°C or lower and preferably -12°C or lower. By setting the pour point to the upper limit value or less, the shape followability and flexibility at a low temperature are easily obtained, and the tackiness is easily improved while maintaining good moldability.

The pour point is measured according to JIS K 2269.

The density of the saturated hydrocarbon compound (b1) is preferably 0.70 to 1.00 g/cm³, more preferably 0.75 to 0.95 g/cm³, and even more preferably 0.80 to 0.90 g/cm³.

As the saturated hydrocarbon compound (b1), for example, a saturated hydrocarbon compound having 20 or more carbon atoms is preferable, a saturated hydrocarbon compound having 20 or more and 40 or less of carbon atoms is more preferable, and liquid paraffin or the like is particularly preferable.

The content of the saturated hydrocarbon compound (b1) is preferably 5 to 100 parts by mass, more preferably 5 to 80 parts by mass, and even more preferably 5 to 50 parts by mass with respect to 100 parts by mass of the 4-methyl-1-pentene-based polymer (a).

The Shore A hardness of the α-olefin polymer (b2) is preferably 20 to 100, more preferably 25 to 90, even more preferably 30 to 80, and still even more preferably 35 to 68. By setting the Shore A hardness to the above lower limit value or more, the sticky feeling can be suppressed and appropriate moldability can be maintained, and by setting the Shore A hardness to the above upper limit value or less, the moldability can be prevented from being lowered due to being too hard. In addition, the flexibility of the obtained molded article can be maintained.

The Shore A hardness can be measured according to JIS K 6253.

The density of the α-olefin polymer (b2) is preferably 0.75 to 1.15 g/cm³, more preferably 0.80 to 0.10 g/cm³, even more preferably 0.85 to 0.95 g/cm³, and still even more preferably 0.86 to 0.90 g/cm³.

The α-olefin polymer (b2) may contain at least an α-olefin as a constitutional unit. More specifically, the following examples are given.

Examples of the α-olefin polymer (b2) include homopolymerization of an α-olefin or copolymerization of two or more kinds of α-olefins. Examples of the α-olefins include those having 2 to 20 carbon atoms, and preferably 2 to 8 carbon atoms, and specific examples thereof include ethylene, propylene, 1-butene, 1-hexene, 1-octene, and 4-methyl-1-pentene. Among these, ethylene and propylene are preferable. The α-olefin may be copolymerized with two or more kinds of α-olefins. The copolymerization may be any of alternating copolymerization, random copolymerization, and block copolymerization.

Further, the α-olefin polymer (b2) may contain at least an α-olefin as a constitutional unit, and may be a copolymer to which a comonomer other than α-olefin is applied. Examples of such a comonomer include compounds having a polymerizable double bond such as styrenes such as styrene, 4-methylstyrene, and 4-dimethylaminostyrene, dienes such as 1,4-butadiene, 1,5-hexadiene, 1,4-hexadiene and 1,7-octadiene, cyclic compounds such as norbornene and cyclopentene, and oxygen-containing compounds such as hexenol, hexenoic acid, and methyl octenoate. Among these, block copolymers of α-olefins and styrenes are preferable. That is, the α-olefin polymer (b2) may be a styrene-based elastomer.

The content of the α-olefin polymer (b2) is preferably 20 to 250 parts by mass, and more preferably 30 to 240 parts by mass, and even more preferably 50 to 230 parts by mass with respect to 100 parts by mass of the 4-methyl-1-pentene-based polymer (a).

### [Other Components]

The composition according to the present embodiment may include components other than the 4-methyl-1-pentene-based polymer (a) and the organic compound (b).

### [Modified Resin (a2)]

From a viewpoint of further improving appearance, texture, and the like, the composition according to the present embodiment may contain a modified resin (a2) (here, the 4-methyl-1-pentene-based polymer (a) and the organic compound (b) according to the present embodiment is excluded). Examples of the modified resin (a2) according to the present embodiment include one kind or two or more kinds selected from a thermoplastic resin, a thermoplastic elastomer, and a rubber.

Examples of the thermoplastic resin (here, the 4-methyl-1-pentene-based polymer (a1) according to the present embodiment is excluded) include thermoplastic polyolefin resins such as low-density polyethylene, medium-density polyethylene, high-density polyethylene, high-pressure low-density polyethylene, polypropylene, poly 1-butene, poly 4-methyl-1-pentene, poly 3-methyl-1-butene, ethylene·α-olefin copolymer, propylene·α-olefin copolymer, 1-butene·α-olefin copolymer, cyclic olefin copolymer, and chlorinated polyolefin; thermoplastic polyamide-based resins such as aliphatic polyamide (nylon 6, nylon 11, nylon 12, nylon 66, nylon 610, nylon 612) and polyether block amide copolymer; thermoplastic polyester-based resins such as polyethylene terephthalate and polybutylene terephthalate; thermoplastic vinyl aromatic resins such as polystyrene, ABS resin, and AS resin; vinyl chloride resins; vinylidene chloride resins; acrylic resins; ethylene-vinyl acetate copolymers; ethylene-methacrylic acid acrylate copolymers; ionomers; ethylene-vinyl alcohol copolymers; polyvinyl alcohols; fluorine-based resins such as polyvinyl fluoride resin, polytetrafluoroethylene, polyvinylidene fluoride, and ETFE; polycarbonate; polyacetal; polyphenylene oxide; polyphenylene sulfide; polyimide; polyarylate; polysulfone; polyether sulfone; rosin-based resins; terpene-based resins; petroleum resins; and the like.

Examples of the rubber include ethylene·α-olefin·diene copolymer rubber, propylene·α-olefin·diene copolymer rubber, and the like.

In addition, examples of the thermoplastic elastomer include an olefin-based elastomer, a styrene-based elastomer, an acid-modified styrene-based elastomer, a vinyl chloride-based elastomer, a urethane-based elastomer, an ester-based elastomer, an amide-based elastomer, and the like.

In addition, these modified resins (a2) optionally be modified by acid with acrylic acid, methacrylic acid, maleic acid or the like.

These modified resins (a2) may be used alone or in combination of two or more kinds thereof.

Among these modified resins (a2), one kind or two or more kinds selected from low-density polyethylene, medium-density polyethylene, high-density polyethylene, high-pressure low-density polyethylene, polypropylene, poly 1-butene, poly 4-methyl-1-pentene, poly 3-methyl-1-butene, ethylene·α-olefin copolymer, propylene·α-olefin copolymer, and 1-butene·α-olefin copolymer are preferable, and one kind or two or more kinds selected from polyethylene, polypropylene, poly-1-butene, poly-4-methyl-1-pentene, ethylene·α-olefin copolymer, propylene·α-olefin copolymer, 1-butene·α-olefin copolymer, ethylene·vinyl acetate copolymer, polyether block amide, ionomer, fluorine-based resin, acid-modified fluorine-based resin, rosin-based resin, terpene-based resin, petroleum resin, and styrene-based elastomer, the addition of which improve melt tension are more preferable.

In addition, those having appropriate compatibility with the 4-methyl-1-pentene-based polymer (a) according to the present embodiment are even more preferable. Further, among the styrene-based elastomers, commercially available products such as styrene-isoprene block copolymer (product name: HYBRAR, brand: 5127), hydrogenated styrene-isoprene block copolymer (product name: HYBRAR, brand: 7125, and product name: SEPTON, brand: 2004F), and hydrogenated styrene-isoprene-butadiene block copolymer (product name: HYBRAR, brand: 7311F), manufactured by Kuraray Co., Ltd., hydrogenated styrene-butadiene block copolymer (product name: KRATON G, brand: G1651, and G1657) manufactured by Kraton Corporation, hydrogenated styrene-butadiene block copolymer (product name: DYNARON, brand: 1320P) manufactured by JSR Corporation, and hydrogenated styrene-butadiene block copolymers (product name: TUFTEC, H1221, and S.O.E, brand: S1605, S1611, and L609) manufactured by Asahi Kasei Corporation can be preferably used from the viewpoint of compatibility, the temperature range showing the local maximum value of the loss tangent, and the magnitude of the local maximum value of the loss tangent.

For the composition according to the present embodiment, one kind selected from these modified resins (a2) can be used alone or two or more kinds thereof can be used in combination.

The content of the modified resin (a2) in the composition according to the present embodiment is not particularly limited, and when the entire content of the composition is 100% by mass, the content of the modified resin (a2) is preferably 0.5% by mass or more, more preferably 1% by mass or more, even more preferably 2% by mass or more, still even more preferably 3% by mass or more, and preferably 50% by mass or less, more preferably 40% by mass or less, even more preferably 35% by mass or less, still even more preferably 30% by mass or less, and particularly preferably 25% by mass or less.

When the content of the modified resin (a2) is the lower limit value or more, it is possible to further improve appearance, texture, and the like of the composition according to the present embodiment. When the content of the modified resin (a2) is the upper limit value or less, it is possible to further improve performance balance of flexibility and the like of the composition according to the present embodiment.

### [Other Components]

The composition according to the present embodiment may be mixed with additives such as a foaming agent, a heat stabilizer, an antioxidant, an ultraviolet absorber, a pigment, an antistatic agent, a copper inhibitor, a flame retardant, a neutralizing agent, a plasticizer, a nucleating agent, a weather stabilizer, a light stabilizer, an anti-aging agent, a fatty acid metal salt, a softener, a dispersant, a coloring agent, a lubricant, a natural oil, a synthetic oil, a wax, and the like, depending on the necessity. Among these, in particular, the plasticizer, the softener, the natural oil, and the synthetic oil may be used by controlling the kind and the addition amount in order to adjust a temperature showing a local maximum value of the loss tangent (tan δ) of solid viscoelasticity of the composition according to the present embodiment and the local maximum value of the loss tangent.

Examples of the above-mentioned foaming agent include a chemical foaming agent and a physical foaming agent.

Examples of the chemical foaming agent include inorganic or organic thermal decomposition type chemical foaming agents.

Examples of the inorganic thermal decomposition type chemical foaming agent include inorganic carbonates such as sodium hydrogen carbonate, sodium carbonate, ammonium hydrogen carbonate, and ammonium carbonate, and nitrites such as ammonium nitrite.

Examples of the organic thermal decomposition type chemical foaming agent include nitroso compounds such as N,N'-dimethyl-N,N'-dinitrosoterephthalamide and N, N'-dinitrosopentamethylenetetramine; azo compounds such as azodicarbonamide, azobisisobutyronitrile, azocyclohexylnitrile, azodiaminobenzene, and barium azodicarboxylate; sulfonylhydrazide compounds such as benzenesulfonylhydrazide, toluenesulfonylhydrazide, p,p'-oxybis(benzenesulfonylhydrazide), and diphenylsulfone-3,3'-disulfonylhydrazide; azide compounds such as calcium azide, 4,4'-diphenyldisulfonyl azide and p-toluenesulfonyl azide.

These thermal decomposition type chemical foaming agents may be used alone or in combination of two or more kinds thereof.

Examples of the physical foaming agent include carbon dioxide, nitrogen, hydrocarbons (such as propane, butane, pentane, hexane, heptane, and cyclohexane), hydrofluoroolefins (HFO), heat-expandable microcapsules, or a mixture of carbon dioxide and nitrogen. Any of these can be supplied in any of a gaseous, liquid, or supercritical state.

### [Production Method]

The composition of the present embodiment can be prepared by mixing or melting and kneading each of the 4-methyl-1-pentene-based polymer (a), the organic compound (b), and any other components, as raw materials, by a dry blender, a tumbler mixer, a Banbury mixer, a single screw extruder, a twin screw extruder, a high speed twin screw extruder, a hot roll, and the like.

### <Molded Article>

A molded article of the present embodiment can be obtained by using and molding the above-mentioned composition by a known method. In a case where the molded article according to the present embodiment is a foam, for example, the molded article can be obtained by foam-molding a resin composition containing a foaming agent into a specific shape using a molding apparatus. Here, in the conventional extrusion foam molding, when foam molding is performed, a phenomenon of die drool that the incompatible component in the compounding materials is deposited at the outlet of the die is likely to occur, and there is a problem that the moldability tends to deteriorate, such as streaks on the extrusion molded article. On the other hand, in the foamed molded article according to the present embodiment, since the above-mentioned composition is used, the occurrence of die drool can be effectively suppressed, and good moldability can be stably obtained.

Further, the chemical foaming agent may be blended with the composition of the present embodiment and uniformly mixed before the composition being put into the extrusion molding machine, or the chemical foaming agent processed into a master batch may be used. In addition, in a case where carbon dioxide is used as the physical foaming agent, it is preferable that the composition of the present embodiment comes into a state of being kneaded and plasticized in the extrusion molding machine, and then is directly injected into the extrusion molding machine.

The expansion ratio is a value obtained by calculating the densities of the composition before foaming and the foam from the weight of each sample measured in water and air using an electronic densimeter MD-300S manufactured by ALFA MIRAGE Co., Ltd., according to ASTM D 1505 (underwater substitution method), and then dividing the density of the composition by the density of the foam. The expansion ratio is not particularly limited and can be appropriately determined in a range of 1 to 50 times in consideration of all physical properties of the sheet 11.

### [Shape]

The shape of the molded article according to the present embodiment is not particularly limited, and is preferably a sheet-like shape. In a case of a sheet-like shape, the thickness is preferably in a range of 0.1 mm or more and 30 mm or less, more preferably in a range of 0.2 mm or more and 20 mm or less, and even more preferably in a range of 0.3 mm or more and 12 mm or less. By setting the thickness to the above lower limit value or more, a good balance between shape followability, mechanical properties, moldability, moisture resistance, and the like can be obtained. On the other hand, by setting the thickness to the above upper limit value or less, the lightness, appearance, and handleability can be improved.

In addition, in the case where the molded article of the present embodiment is a foam, the density thereof is preferably 0.10 to 1.0 g/cm³. The more preferable upper limit value of the density of the foam is in the order of 0.90 g/cm³ or less, 0.85 g/cm³ or less, and 0.80 g/cm³ or less. On the other hand, the more preferable lower limit value of the density of the foam is 0.20 g/cm³ or more, 0.30 g/cm³ or more, and 0.40 g/cm³ or more.

By setting the density of the foam to the above lower limit value or more, a good balance between shape followability, mechanical properties, moldability, moisture resistance, and the like can be obtained. On the other hand, by setting the density of the foam to the above upper limit value or less, the lightness, appearance, and handleability can be improved.

In addition, the density of the foam is adjusted by controlling the kind and content of the organic compound (b), the expansion ratio, the foaming conditions and the like.

However, in the present embodiment, the expansion ratio is not particularly limited and can be appropriately determined in consideration of various physical properties of the obtained foam.

The molded article according to the present embodiment may have a ventilation hole in order to enhance air permeability according to the application. For example, by using processing techniques such as mechanical punching, needle processing, laser perforation, and water jet, a large number of ventilation holes communicating with each other can be provided on the front and back sides.

### [Application]

The composition and the molded article according to the present embodiment are widely used regardless of the field. Examples thereof include mobility products such as automobile parts, railway parts, aircraft parts, ship parts, and bicycle parts; electronic equipment; household electrical appliances; audio equipment; camera goods; precision equipment; game devices; VR devices; civil engineering and construction articles such as civil engineering parts, construction parts, and construction materials; household goods such as furniture and bedding; daily necessities such as kitchenware, toiletries and stationery; outdoor goods and leisure goods such as backpacks; agricultural goods for gardening or the like; decorative products such as apparel goods (such as clothes, innerwear, core materials of underwear (for example, brassieres, shoulder pads, shapewear, and the like), hats, belts, school bag linings, business card holders, and glasses), shoe goods (such as (various insoles, shoe linings, various equipment, shoes, and shoelaces), accessories and small portable miscellaneous goods; medical related products such as medical goods and health care goods; sporting goods such as sports products; education and toy goods such as books and toys; packaging related goods such as packaging goods; cosmetics related goods such as face wash and makeup goods; lighting goods such as LED lighting; culture goods such as fishery goods; safety goods such as a child seat; music goods; pet goods; and fishing goods.

Although the embodiments of the present invention have been described above, these are examples of the present invention, and various configurations other than the above can be adopted. In addition, the present invention is not limited to the above-described embodiments, and modifications, improvements, and the like within a range in which the object of the present invention can be achieved are included in the present invention.

### [Examples]

Hereinafter, the present embodiment will be described in detail with reference to Examples and Reference Examples . It should be noted that the present embodiment is not limited to the descriptions of these examples.

### <Measuring Method>

### (1) Dynamic Viscoelasticity Measurement 1

The 4-methyl-1-pentene-based polymer (a) was cut into a strip having a size of 30 mm in length × 10 mm in width to obtain a test piece. Next, for the obtained test piece, using MCR 301 manufactured by Anton Paar GmbH, under the conditions of a chuck-to-chuck distance of 20 mm, a temperature dependence of dynamic viscoelasticity was measured in a temperature range of -60°C to 240°C, a frequency of 1.59 Hz, a strain amount of 0.1%, a temperature rising rate of 4 °C/min, and a twist mode. From the obtained graph, the temperature (Tₐ) showing the local maximum value of the loss tangent (tan δ) and the local maximum value of the tan δ were obtained respectively.

### (2) Dynamic Viscoelasticity Measurement 2

The 4-methyl-1-pentene-based polymer (a) was cut into a strip having a size of 30 mm in length × 10 mm in width to obtain a test piece. Next, for the obtained test piece, the temperature dependence of dynamic viscoelasticity was measured in a temperature range of -60°C to 240°C using a viscoelasticity measuring apparatus RSA-III (trade name) manufactured by TA Instruments Japan Inc. in a nitrogen atmosphere under the conditions of a chuck-to-chuck distance of 20 mm, a frequency of 1.59 Hz, a strain amount of 0.1%, a temperature rising rate of 4 °C/min, and a tensile mode. From the obtained graph, the temperature (Tₐ) showing the local maximum value of the loss tangent (tan δ) and the local maximum value of the tan δ were obtained respectively.

### (3) Intrinsic Viscosity [η] of 4-Methyl-1-Pentene-Based Polymer (a)

The intrinsic viscosity [η] was measured at 135°C using a decalin solvent.

### (4) Composition of 4-Methyl-1-Pentene-Based Polymer (a)

The contents of 4-methyl-1-pentene and α-olefin in the 4-methyl-1-pentene-based polymer (a) were quantitatively determined by ¹³C-NMR.

### (5) Density of 4-Methyl-1-Pentene-Based Polymer (a)

The density was calculated from the weight of each sample measured in water and air using an electronic densimeter MD-300S manufactured by ALFA MIRAGE Co., Ltd. according to ASTM D 1505 (underwater substitution method).

### (6) Each Melt Flow Rate (MFR)

According to JIS K 7210, the measurement was performed under the conditions of 230°C and a test load of 2.16 kgf.

### (7) Measurement of Viscosity of Organic Compound (b)

The viscosity was obtained by conversion from the value of kinematic viscosity measured at 40°C according to JIS K 2283.

### (8) Density of Foam

The density was calculated from the weight of each sample measured in water and air using an electronic densimeter MD-300S manufactured by ALFA MIRAGE Co., Ltd. according to ASTM D 1505 (underwater substitution method).

### (9) Expansion Ratio of Foam

The expansion ratio was obtained by calculating the densities of the composition before foaming and the foam from the weight of each sample measured in water and air using an electronic densimeter MD-300S manufactured by ALFA MIRAGE Co., Ltd., according to ASTM D 1505 (underwater substitution method), and then dividing the density of the composition by the density of the foam.

### <Materials>

The raw materials used in Examples and Reference Examples are shown below.
(1) 4-Methyl-1-pentene-based polymer (a): copolymer of 4-methyl-1-pentene and propylene (content of constitutional unit derived from 4-methyl-1-pentene: 72 mol%, content of constitutional unit derived from propylene: 28 mol%)
   · Temperature Tₐ showing local maximum value of loss tangent (tan δ): 28°C
   · Local maximum value of loss tangent: 2.6
   · Glass transition temperature: 28°C
   · Intrinsic viscosity in decalin at 135°C [η]: 1.5 dL/g
   · Density: 0.84 g/cm³
   · MFR: 10 g/10 min.
(2) Organic Compound (b)
   (2-1) Saturated hydrocarbon compound (b1) : liquid paraffin "No. 530-SP" (manufactured by Sanko Chemical Industry Co., Ltd.)
      · Density: 0.86 g/cm³
      · Viscosity: 87 (mPa·s)
      · Pour point: -15°C
   (2-2) α-olefin polymer (b2) 1: hydrogenated styrene-isoprene-butadiene block copolymer "HYBRAR 7311F" (manufactured by Kuraray Co., Ltd.)
      · Density: 0.89 g/cm³
         MFR: 2 g/10 min.
         Shore A hardness: 41
   (2-3) α-olefin polymer (b2) 2: hydrogenated styrene-isoprene block copolymer "SEPTON 2004F" (manufactured by Kuraray Co., Ltd.)
      · Density: 0.89 g/cm³
         MFR: 5 g/10 min.
         Shore A hardness: 67
   (2-4) α-olefin polymer (b2) 3: hydrogenated styrene-isoprene block copolymer "G1651" (manufactured by Kraton Corporation)
      · Density: 0.91 g/cm³
      · MFR: less than 1 g/10 min.
      · Shore A hardness: 70
   (2-5) α-olefin polymer (b2) 4: hydrogenated styrene-butadiene block copolymer "H1221" (manufactured by Asahi Kasei Corporation)
      · Density: 0.89 g/cm³
      · MFR: 4.5 g/10 min.
      · Shore A hardness: 42
   (2-6) α-olefin polymer (b2) 5: hydrogenated styrene-butadiene block copolymer "G1657" (manufactured by Kraton Corporation)
      · Density: 0.89 g/cm³
      · MFR: 9 g/10 min.
      · Shore A hardness: 47
   (2-7) α-olefin polymer (b2) 6: hydrogenated styrene-butadiene block copolymer "1320P" (manufactured by JSR Corporation)
      - Density: 0.89 g/cm³
      - MFR: 3.5 g/10 min.
      - Shore A hardness: 42
   (2-8) α-olefin polymer (b2) 7: hydrogenated styrene-butadiene block copolymer "S1605" (manufactured by Asahi Kasei Corporation)
      · Density: 1.00 g/cm³
         MFR: 5 g/10 min.
      · Shore A hardness: 87
   (2-9) Chemical foaming agent: sodium bicarbonate-based chemical foaming agent master batch "POLYTHLENE EE275F" (manufactured by Eiwa Chemical Ind. Co., Ltd.)

### <Preparation of Compositions and Molded Articles of Examples 1 to 6 and Reference Example 1>

As the molding machine, an apparatus including a single screw extrusion molding machine (cylinder inner diameter D: 50 mm, full flight screw, L/D: 32 mm when effective screw length is L, carbon dioxide supply position: 17.5D from screw supply side), a T-die (die width: 320 mm, lip opening: 0.2 to 1.8 mm), a cooling roll (outer diameter: 50 mm, formed of steel subjected to mirror surface finish hard chrome plating surface treatment, water cooling type), a carbon dioxide supply device, a cooling roll, and a take-off machine was used. First, the above-mentioned raw materials were put into the extrusion molding machine at the ratio shown in Table 1, (each component raw material was) melted and kneaded under the conditions of a temperature of 100°C to 250°C at each part of the cylinder and a screw rotation speed of 10 to 36 rpm, and extruded into a sheet-like shape from the T-die such that the extrusion amount was 3.5 to 8.5 kg/hour at a resin temperature of 130°C to 204°C in the cylinder head portion.

The extruded sheet was cooled with the cooling roll (temperature of water flowing in the roll: 30°C), and taken off by using the take-off machine (take-off rate: 0.4 to 2.3 m/min) to obtain a molded article having a sheet width of about 240 to 300 mm.

### <Preparation of Compositions and Molded Articles of Examples 7 to 14>

As the molding machine, an apparatus including a single screw extrusion molding machine (cylinder inner diameter D: 50 mm, full flight screw, L/D: 32 mm when effective screw length is L), a T-die (die width: 320 mm, lip opening: 0.2 to 0.3 mm), a cooling roll (outer diameter: 50 mm, formed of steel subjected to mirror surface finish hard chrome plating surface treatment, water cooling type), a cooling roll, and a take-off machine was used. First, the above-mentioned raw materials and 1 part by weight of a chemical foaming agent (POLYTHLENE EE275F) were put into the extrusion molding machine at the ratio shown in Table 1 from the outside, (each component raw material was) melted and kneaded under the conditions of a temperature of 120°C to 230°C at each part of the cylinder and a screw rotation speed of 10 to 13 rpm, and extruded into a sheet-like shape from the T-die such that the extrusion amount was 3.5 to 4.4 kg/hour at a resin temperature of 190°C to 204°C in the cylinder head portion.

The extruded sheet was cooled with the cooling roll (temperature of water flowing in the roll: 30°C), and taken off by using the take-off machine (take-off rate: 0.8 to 0.9 m/min) to obtain a molded article having a sheet width of about 240 to 270 mm.

The following evaluation was performed on the molded article using the obtained composition. The results are shown in Table 1.

### <Evaluation>

### (1) Moldability (Presence or Absence of Die Drool)

Evaluation was performed according to the following criteria by visual inspection in a state of steady operation at the time of molding.

### · Criteria

A: Almost no die drool was found during extrusion from the die.
B: A small amount of die drool was generated during extrusion from the die, but almost no effect on the molded article was found.
C: Although die drool was generated during extrusion from the die and a little effect such as roughness on the surface of the molded article was confirmed, almost no significant effect such as attachment to the molded article was found.
D: Although die drool was generated during extrusion from the die and the effect such as roughness on the surface of the molded article was confirmed, the effect such as attachment to the molded article was found.
E: A large amount of die drool was generated during extrusion from the die, and a significant effect such as attachment to the molded article was found.

### (2) Moldability (Tackiness)

Evaluation was performed according to the following criteria by visual inspection in a state of steady operation at the time of molding.

### · Criteria

A: The tackiness was low, and no attachment to the roll of the take-off machine occurred when the molded article was taken off.
B: Although the tackiness was low, and the attachment to the roll of the take-off machine occurred on rare occasions when the molded article was taken off, almost no effect on the molded article was found.
C: Although the tackiness was observed, the attachment to the roll of the take-off machine occurred when the molded article was taken off, and a little effect such as wrinkles on the surface of the molded article was found, but no significant effect such as molding troubles was found.
D: The tackiness was high, the attachment to the roll of the take-off machine or the like frequently occurred when the molded article was taken off, and there was a possibility that molding troubles such as roll winding might occur.

**[Table 1]**

| Raw material | | | | | Mixing ratio of raw materials (parts by mass) | | | | | | | | | | | | | | |
|---|---|---|---|---|---|---|---|---|---|---|---|---|---|---|---|---|---|---|---|
| | | Viscosity (mPa ·s) | MFR (g/10 min.) | MFR ratio between organic compound (b)/4-methyl-1-pentene-basec polymer (a) | Example 1 | Example 2 | Example 3 | Example 4 | Example 5 | Example 6 | Example 7 | Example 8 | Example 9 | Example 10 | Example 11 | Example 12 | Example 13 | Example 14 | Reference Example 1 |
| 4-Methyl-1-pentene-based polymer (a) | | - | 10 | - | 100 | 60 | 40 | 60 | 40 | 60 | 60 | 40 | 60 | 40 | 60 | 40 | 60 | 40 | 100 |
| | Saturated hydrocarbon compound (b1) | 87 | - | - | 5 | - | - | - | - | 5 | - | - | - | - | - | - | - | - | - |
| | α-Olefin polymer (b2) 1 | - | 2 | 0.2 | - | 40 | 60 | - | - | - | - | - | - | - | - | - | - | - | - |
| | α-Olefin polymer (b2) 2 | - | 5 | 0.5 | - | - | - | 40 | 60 | - | - | - | - | - | - | - | - | - | - |
| Organic compound (b) | α-Olefin polymer (b2) 3 | - | Less than 1 | Less than 0.1 | - | - | - | - | - | 40 | | | - | - | - | - | - | - | - |
| | α-Olefin polymer (b2) 4 | - | 4.5 | 0.45 | - | - | - | - | - | - | 40 | 60 | | | - | - | - | - | - |
| | α-Olefin polymer (b2) 5 | - | 9 | 0.9 | - | - | - | - | - | - | - | - | 40 | 60 | | | - | - | - |
| | α-Olefin polymer (b2) 6 | - | 3.5 | 0.35 | - | - | - | - | - | - | - | - | - | - | 40 | 60 | | | - |
| | α-Olefin polymer (b2) 7 | - | 5 | 0.5 | - | - | - | - | - | - | - | - | - | - | - | - | 40 | 60 | |
| | Density of foam (g/cm³) | | | | 0.76 | 0.76 | 0.77 | 0.73 | 0.74 | 0.79 | 0.78 | 0.79 | 0.76 | 0.78 | 0.74 | 0.75 | 0.81 | 0.83 | 0.58 |
| | Expansion ratio of foam | | | | 1.1 | 1.1 | 1.1 | 1.2 | 1.2 | 1.2 | 1.1 | 1.1 | 1.1 | 1.1 | 1.2 | 1.2 | 1.1 | 1.1 | 1.4 |
| | tan 5 peak temperature 1 | | | | 23 | 25 | 27 | 24 | 26 | 21 | - | - | - | - | - | - | - | - | 28 |
| Evaluation | tan 5 maximum value 1 | | | | 2.4 | 1.7 | 0.9 | 1.2 | 0.6 | 1.3 | - | - | - | - | - | - | - | - | 2.4 |
| | tan 5 peak temperature 2 | | | | 22 | 27 | 26 | 26 | 28 | 22 | 28 | 26 | 28 | 27 | 26 | 26 | 26 | 25 | 30 |
| | tan 5 maximum value 2 | | | | 2.7 | 2.3 | 2.0 | 1.8 | 1.6 | 1.5 | 2.4 | 2.1 | 2.2 | 1.7 | 2.4 | 1.9 | 2.0 | 1.7 | 2.5 |
| | Moldability | Presence or absence of die drool during extrusion from die | | | A | B | B | B | B | C | B | B | D | D | B | B | B | B | A |
| | | Tackiness | | | C | B | C | B | C | C | B | C | B | C | B | C | B | C | A |

This application claims priority based on Japanese Patent Application No. 2020-062417 filed on March 31, 2020, the entire disclosure of which is incorporated herein.

## Claims

1. A composition comprising:
a 4-methyl-1-pentene-based polymer (a) in which at least one or more temperatures showing a local maximum value of a loss tangent (tan δ), which is obtained by dynamic viscoelasticity measurement under conditions of a temperature rising rate of 4 °C/min, a frequency of 1.59 Hz, and a strain amount of 0.1%, are present in a range of 10°C or higher and 100°C or lower, and the local maximum value of the loss tangent is 0.5 or more and 3.5 or less; and
an organic compound (b),
wherein a content of the organic compound (b) is 5 to 250 parts by mass with respect to 100 parts by mass of the 4-methyl-1-pentene-based polymer (a), and
the organic compound (b) has a viscosity (mPa·s) in a range of 65 to 120, or a ratio between a melt flow rate (g/10 min.) of the 4-methyl-1-pentene-based copolymer (a) and a melt flow rate (g/10 min.) of the organic compound (b) is 1:1.0 to 0.1.

2. A composition comprising:
a 4-methyl-1-pentene-based polymer (a) in which at least one or more temperatures showing a local maximum value of a loss tangent (tan δ), which is obtained by dynamic viscoelasticity measurement under conditions of a temperature rising rate of 4 °C/min, a frequency of 1.59 Hz, and a strain amount of 0.1%, are present in a range of 10°C or higher and 100°C or lower, and the local maximum value of the loss tangent is 0.5 or more and 3.5 or less; and
an organic compound (b),
wherein a content of the organic compound (b) is 5 to 250 parts by mass with respect to 100 parts by mass of the 4-methyl-1-pentene-based polymer (a), and
the organic compound (b) has a viscosity (mPa·s) in a range of 65 to 120, or a melt flow rate (g/10 min.) of 6 or less.

3. The composition according to claim 1 or 2,
wherein the 4-methyl-1-pentene-based polymer (a) includes a constitutional unit derived from 4-methyl-1-pentene and a constitutional unit derived from an α-olefin having 2 to 20 carbon atoms other than the 4-methyl-1-pentene.

4. The composition according to claim 3,
wherein when a sum of the constitutional unit derived from the 4-methyl-1-pentene and the constitutional unit derived from the α-olefin having 2 to 20 carbon atoms other than the 4-methyl-1-pentene is 100 mol%, a content of the constitutional unit derived from the 4-methyl-1-pentene is 10 mol% or more and 90 mol% or less.

5. The composition according to claim 4,
wherein the α-olefin has 2 to 5 carbon atoms.

6. The composition according to any one of claims 1 to 5,
wherein the organic compound (b) includes a saturated hydrocarbon compound (b1) having a viscosity (mPa·s) in a range of 65 to 120 and a pour point of -10°C or lower.

7. The composition according to claim 6,
wherein the saturated hydrocarbon compound (b1) has 20 or more carbon atoms.

8. The composition according to any one of claims 1 to 7,
wherein the composition includes an α-olefin polymer (b2) having 2 to 20 carbon atoms.

9. The composition according to claim 8,
wherein the α-olefin polymer (b2) includes a copolymer using a compound having a polymerizable double bond selected from styrenes, dienes, cyclic compounds, and oxygen-containing compounds as a comonomer.

10. The composition according to any one of claims 1 to 9,
wherein at least one or more temperatures showing the local maximum value of the loss tangent (tan δ) of dynamic viscoelasticity of the 4-methyl-1-pentene-based polymer (a) are present in a range of 10°C or higher and 40°C or lower, and the local maximum value of the loss tangent is 0.8 or more and 3 or less.

11. The composition according to any one of claims 1 to 10,
wherein the composition includes a foaming agent.

12. The composition according to claim 11,
wherein the foaming agent is an inorganic or organic thermal decomposition type chemical foaming agent or a physical foaming agent.

13. A molded article comprising:
the composition according to any one of claims 1 to 12.

14. The molded article according to claim 13,
wherein the molded article is a foam and has a density of 0.10 to 1.0 g/cm³.
